(19) Europäisches Patentamt
European Patent Office
Office européen des brevets

(11) Publication number: 0 273 149 A2

(12) **EUROPEAN PATENT APPLICATION**

(21) Application number: 87116435.6

(22) Date of filing: 06.11.87

(51) Int. Cl.⁴: C08L 67/02, C08K 5/15, C08K 5/34, C08K 7/00, //(C08L67/02,C08K3:34)

(30) Priority: 30.12.86 US 947662

(43) Date of publication of application: 06.07.88 Bulletin 88/27

(84) Designated Contracting States: DE FR GB IT NL

(71) Applicant: GENERAL ELECTRIC COMPANY
1 River Road
Schenectady New York 12305(US)

(72) Inventor: Minnick, Michael Gerald
436 Lawrence Drive
Mt. Vernon Indiana 47620(US)

(74) Representative: Sieb, Rolf, Dr. et al
General Electric - Deutschland
Patentabteilung Praunheimerlandstrasse 50
D-6000 Frankfurt/Main(DE)

(54) **Poly (cyclohexanedimethanol terephthalate) molding compositions.**

(57) Molding compositions comprising poly(cyclohexanedimethanol terephthalate), a reinforcing agent, optionally, a crystallization promoting agent, optionally a flame retardant agent and tribranched epoxy and/or triallyl isocyanurates as melt stabilizers, are disclosed. These compositions are characterized by substantially higher melt stability and improved thermal aging properties.

EP 0 273 149 A2

# IMPROVED POLY(CYCLOHEXANEDIMETHANOL TEREPHTHALATE) MOLDING COMPOSITIONS

This invention relates to molding compositions comprising reinforced poly(cyclohexanedimethanol terephthlate) resins and trifunctional agents for enhancing melt stability.

## BACKGROUND OF THE INVENTION

Poly(cyclohexanedimethanol terephthalate) or PCT is a polyester derived from cyclohexanedimethanol and a hexacarbocyclic dicarboxylic acid, e.g., terephthalic acid. In co-filed, commonly assigned application Serial No. , filed , Attorneys Docket 336-2001 (8CV-4306/4337/4334) it is disclosed that PCT is advantageously compounded with nucleating agents to increase its rate of recrystallization from the melt and with reinforcing agents, such as glass fibers, to provide molded articles with excellent properties. Such compositions can also be rendered flame retardant in ways known to those skilled in this art, and they can also be melt stabilized in known ways, e.g., by adding epoxide compounds, especially linear and/or novolac epoxy resins. However, a need still exists to provide improved melt stabilization and better retention of physical properties after thermal aging, especially the glass-reinforced and/or flame-retardant modifications.

It has now been discovered that a new family of modifiers, namely trifunctional epoxy resins and/or triallyl isocyanurate compounds are effective substantially to improve the melt viscosity and thermal stability of PCT-containing resin compositions, and not affect any of the other vitally important physical properties.

## SUMMARY OF THE INVENTION

Provided in accordance with the present invention are improved thermoplastic molding compositions comprising:

(a) a polyester resin derived from a mixture of cis-and trans-cyclohexanedimethanol, and a hexacarbocyclic dicarboxylic acid in combination with

(b) a reinforcing agent optionally in combination with an effective amount of

(c) a crystallization promoting agent selected from talc, clay, or a mixture thereof, the improvement comprising said composition containing

(d) a stabilizer comprising a tribranched phenolic epoxy, a trifunctional allyl isocyanurate compound or a mixture thereof in an amount effective to improve the melt stability of said composition.

Also provided are thermoplastic molding compositions as described above, but further defined, wherein component (a) comprises from about 35 to about 80 parts by weight, component (b) comprises from about 15 to about 45 parts by weight, component (c) comprises from 0 to about 10 parts by weight, and component (d) comprises from about 0.5 to about 5 parts by weight, based on 100 parts of (a), (b), (c) and (d) combined.

Also contemplated by this invention are thermoplastic molding compositions as described above but further including an effective, flame retarding amount of (e) a flame retardant compound for said composition.

## DETAILED DESCRIPTION OF THE INVENTION

Useful as component (a) in accordance with the invention herein are the polyesters derived from cyclohexanedimethanol which are prepared by condensing either the cis-or trans-isomer (or a mixture thereof) of, for example, 1,4-cyclohexanedimethanol with a hexacarbocyclic dicarboxylic acid so as to produce a polyester having recurring units having the following formula:

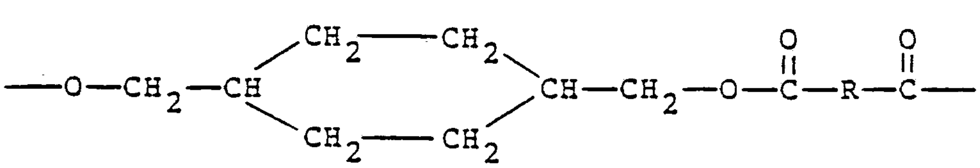 (I)

wherein the substituted cyclohexane ring is selected from the group consisting of the cis-and transisomers thereof and Rrepresents an organic radical containing from 6 to 20 carbon atoms which is the decarboxylated residue derived from a hexanecarbocyclic dicarboxylic acid.

The preferred polyester resins may be derived from the reaction of a mixture of the cis-or trans-isomers of 1,4-cyclohexanedimethanol with terephthalic acid. These polyesters have recurring units of the formula:

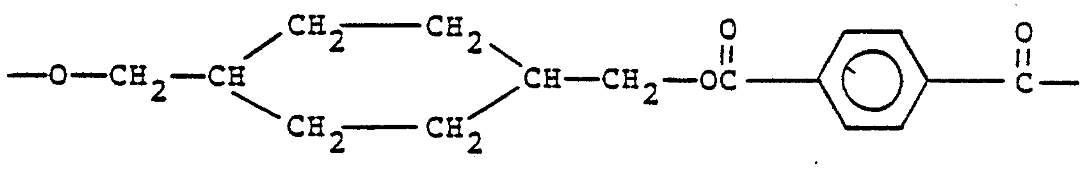 (II)

These polyesters can be produced by well known methods in the art such as those set forth in U.S. Pat. No. 2,901,466 which is incoporated herein by reference. The poly(1,4-cyclohexanedimethanol terephthalate) is commercially available from a number of sources.

The polyester resins used in this invention can be prepared by condensing 1,4-cyclohexanedimethanol and minor amounts of other bifunctional glycols with the hexacarbocyclic dicarboxylic acid. These other bifunctional glycols include the polymethylene glycols containing from 2 to 10 or more carbon atoms such as ethylene glycol, butylene glycol, etc.

Examples of hexacarbocyclic dicarboxylic acids wherein the carboxy radicals are attached in para relationship to a a hexacarbocyclic residue indicated by R in formula I include terephthalic acid, trans-hexahydroterephthalic acid, p,p'-sulfonyldibenzoic acid, 4,4'-diphenic acid, 4,4'-benzophenonedicarboxylic acid, 1,2-di(p-carboxyphenyl)ethane, 1,2-di(p-carboxyphenyl)ethene, 1,2-di(p-carboxyphenoxy)ethane, 4,4'-dicarboxydiphenyl phenyl ether, etc. and mixtures of these. All of these acids contain at least one hexacarbocyclic nucleus. Fused rings can also be present such as in 1,4-or 1,5-naphthalenedicarboxylic acid. The hexacarbocyclic dicarboxylic acids are preferably those containing a trans-cyclohexane nucleus or an aromatic nucleus containing from one to two benzene rings of which at least one has the usual benzenoid unsaturation. Of course, either fused or attached rings can be present. All of the compounds named in this paragraph come within the scope of this preferred group. The preferred dicarboxylic acid is terephthalic acid.

These polyesters should have an intrinsic viscosity between 0.40 and 2.0 dl./g. measured in a 60/40 phenoltetrachloroethane solution or a similar solvent at 25°-30°C. Especially prefered polyesters will have an intrinsic viscosity in the range of 0.6 and 1.2 dl./g.

The reinforcing agent of component (b) may be selected from glass flakes, glass beads and fibers and polymeric fibers and combinations thereof, as well as reinforcing mineral fillers, e.g., mica, wollastonite, etc.

The preferred reinforcing agents are of glass, and it is preferred to use fibrous glass filaments, e.g., P387F® 1/8" chopped fiber, available from Owens Corning Fiberglas Company.

The filamentous glass to be employed as reinforcement in the present compositions is well known to those skilled in the art and is widely available from a number of manufacturers. For compositions ultimately to be employed for electrical uses. It is preferred to use fibrous glass filaments comprised of lime-aluminum borosilicate glass that is relatively soda free. This is known as "E" glass. However, other glasses are useful where electrical properties are not so important, e.g., the low soda glass known as "C" glass. As will be exemplified in the next section, it is most preferred to use glass filaments known as G-filaments, which are Owens Corning Fiberglas, P387F 1/8" chopped fibers. The filaments are made by standard processes, e.g, by steam or air blowing, flame blowing and mechanical pulling. The preferred filaments for plastics reinforcement are made by mechanical pulling. The filament diameters range from about 0.00012 to 0.00075 inch, but this is not critical to the present invention.

The length of the glass filaments and whether or not they are bundled into fibers and the fibers bundled in turn to yarns, ropes or rovings, or woven into mats, and the like, are also not critical to the invention. However, in preparing the molding compositions, it is convenient to use the filamentous glass in the form of chopped strands of from about 1 to about 2 inches long. In articles molded from the instant compositions, on the other hand, even shorter lengths will be encountered because, during compounding, considerable fragmentation will occur. This is desirable, however, because the best properties are exhibited by thermoplastic injection molded articles in which the filament lengths lie between about 0.0005 and 0.125 (one-eight) inch.

Although it is only necessary to use a reinforcing amount of the reinforcing agent, from 1 to 60 parts by weight of the total amount of the composition may comprise the reinforcing agent. A preferred range is from

5 to 50 parts by weight.

The compositions of this invention can include, in addition to the filamentous glass reinforcements of the type described, mineral fillers in combination therewith, such as, e.g., silica, calcium silicate, mica and the like. Preferred as a filler is talc and especially preferred is finely ground talc of up to 325 mesh particle size. These mineral fillers, if present, will generally comprise from about 2 to about 200 parts by weight per 100 parts of reinforcing agent (c).

Other ingredients, such as flow promoters, antioxidants, stabilizers, dyes, pigments, plasticizers, drip retardants and the like can be added in conventional amounts for their conventionally employed purposes.

The optional crystallization promoting agents of component (c) raise the temperature of crystallization (Tcc) of the composition upon cooling from the melt, i.e., the temperature at which crystals first appear upon cooling of the melt is greater than the standard Tcc of the polyester, i.e., the Tcc of the polyester in the absence of a crystallization promoting agent. These agents are also known in the art as nucleating agents. Such agents act as "seeds" in the polyester melt and in conjunction with appopriate conditions during the manufacture of shaped articles, for example, by injection molding, accelerate the crystal formation in the desired manner in a process called nucleation. By raising the Tcc of the composition, crystallization promoting agents permit reduced cycling time and enable higher molecular weight polymers to be used in the molding process.

Suitable crystallization promoting agents in the present invention include talc, e.g. available under the trademark TALCRON® MP4526 from the Pfizer Company; clay and clay that has been surface treated with amino propylsilane, e.g., 0.5% A1100®, Union Carbide Company.

The agent used to stabilize the compositions of the present invention (d) comprisess a tribranched epoxy or isocyanurate compound.

The epoxy compound is made in known ways, e.g., by the reaction of tris(4-hydroxy-phenyl)methene with a glycidyl ether. It has the formula

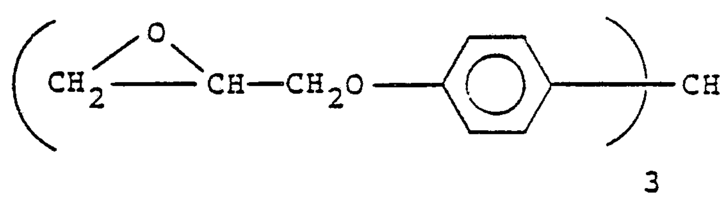

It is also commercially available, e.g., from Dow Chemical Co., Midland, MI, U.S.A. under the tradename XD-9053.01.

Also suitable as tribranched phenolic epoxies (d) are those compounds of the general formula:

X-C —( R)$_3$

where X represents, by way of example but not limitation, hydrogen, alkyl-O-, aryl-O-,

alkyl- $\overset{O}{\overset{\|}{C}}$ -O-, and aryl- $\overset{O}{\overset{\|}{C}}$ -O-;

and R represents, illustratively,

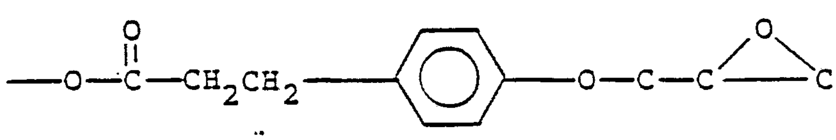

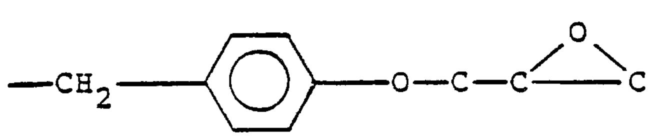

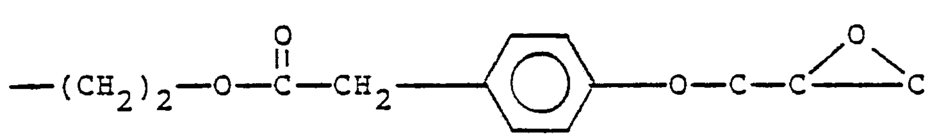

The isocyanurate compound is made in known ways, e.g., by reacting allyl chloride or allyl bromide

with isocyanuric acid. It has the formula

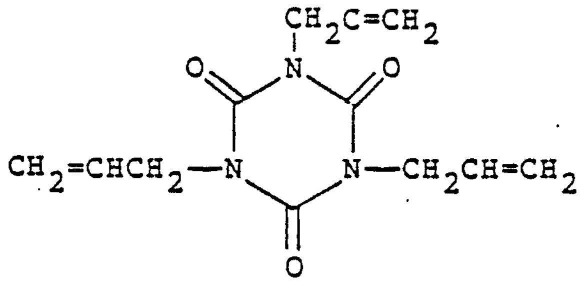

It is also commercially available, e.g, from Nippon Kasei Chemical Co., Mitsubishi International Corp., U.S.A.

The amount of stabilizing agent (d) used can vary widely. In general however, amounts conventionally used for linear epoxide prepolymer stabilizers, e.g., Dow's DEN®667, a bisphenol-A glycidyl ether adduct, or Dow's DEN®485, a novolac epoxy, will be used. For example, about 0.05 to about 10 parts by weight, preferably, from about 0.1 to about 5 parts by weight will be used, based on 100 parts by weight of (a), (b), (c), (d) and, any optional (e), combined.

As has been mentioned, among the features of the invention are compositions which also include an effective, flame retardant amount of (e), a flame retarding agent. These can generally comprise conventional types of flame retardants in conventional amounts. In general, it is convenient to use compounds containing halogen, e.g, chlorine or bromine, nitrogen and/or phosphorus. Such compounds are preferably organic and they can be used alone, or if desired with a synergist, e.g., antimony compounds, e.g., antimony oxide, with organic halogen compounds, e.g., decabromo diphenyl ether, brominated polystyrenes, brominated polycarbonates, and the like. The amount of flame retardant will be selected to provide the desired degree of flame retardancy, in accordance with techniques well known in this art, see, e.g., Fox and Rock, U.S. 4,188,314. For example, with a brominated organic compound, enough to provide about 8 to about 15 parts by weight of bromine, is employed.

The molding composition of this invention can be prepared by blending or mixing any of the combinations of components (a), (b), (c), (d) as hereinabove described, and other optional components (e), as uniformly as possible employing any conventional blending means. Appropriate blending means, such as melt extrusion, batch melting and the like, are well known in the art. Similarly, the various solid components can be granulated, and the granulated components mixed dry in a suitable blender, or for example a Banbury mixer, as uniformly as possible, then melted in an extruder and expressed with cooling.

The molding compositions according to the invention can be usefully shaped into articles of manufacture having valuable properties. Such articles can be produced by the conventional shaping processes, such as casting, injection molding and extruding. Examples of such molding are components for technical equipment, apparatus castings, household equipment, sports equipment, components for the electrical and electronics industries and electrical insulations, car components, circuits, fibers and semi-finished products which can be shaped by machining.

## DESCRIPTION OF THE PREFERRED EMBODIMENTS

The examples that follow are not to be construed to limit the claims in any manner whatsoever. In these examples, the following designations and/or abbreviations are used:

| | | |
|---|---|---|
| PCT | -- | KODAR®3879 poly(cyclohexanedimethanol terephthalate), Eastman Chemical Products |
| Flame retardant | -- | Poly(tribromo styrene), PYROCHEK® C68PB, Ferro Company |
| Flame retardant synergist | -- | (4:1) Sodium antimonate/SURLYN® 8920 concentrate M&T Company |
| Melt stabilizer (conventional) | -- | DER®667 epichlorohydrin-bisphenol-A adduct, Dow Chemical Co. |
| Melt stabilizer (conventional) | -- | DEN®485, epoxylated novolac, Dow Chemical Co. |
| Melt stabilizer (conventional) | -- | ECN®1299, epoxylated cresol novolac, Ciba Geigy Company |
| Melt stabilizer (conventional) | -- | AM®595, barium sodium organophosphate, Ferro Corp. |
| Melt stabilizer (this invention) | -- | XD-9053.01 tris(4-glycidyloxyphenyl) methane, Dow Chemical Co. |
| Melt stabilizer (this invention) | -- | TAIC, triallyl isocyanurate, Nippon Kasei Chemical Co. |

All properties of compositions were measured by ASTM procedures, except for melt viscosity, which was measured on a Monsanto Rheometer using a 15:1 L:D capillary.

## EXAMPLE 1

Compositions of PCT and other agents were dry tumbled in a 25 gallon stainless steel vat and then extruded on 2-1/2" HPM vented extruder (L/D=30:1). Using set point temperatures of 560-620°F. over 5 zones, followed by pelletizing. The pelletized compounds were next dried for 4-8 hours at 275°F. and then molded into ATM standard test parts with a 3.5 oz., 75 ton Van Dorn molding machine. Included for comparison purposes was a composition including melt stabilizers of the prior art. The formulations used and the properties obtained are set forth in Table 1.

TABLE 1

Epoxy Stabilizers in Glass-Reinforced PCT Molding Compounds

| Example | | 1A* | 1 |
|---|---|---|---|
| Compositions (parts by weight) | | | |
| PCT | | 65.6 | 65.6 |
| Reinforcing Glass Filaments[a] | | 30.0 | 30.0 |
| Nucleating agent, talc | | 3.0 | 3.0 |
| Stabilizer, prior art, DER 667 | | 0.7 | -- |
| Stabilizer, prior art, DEN 485 | | 0.3 | -- |
| Stabilizer, this invention XD9053.01 | | -- | 1.0 |
| Antioxidant | | 0.2 | 0.2 |
| Properties | | | |
| Deflection temp. under load, 264 psi,°F. | | 507 | 502 |
| Notched Izod Impact, ft.lbs./in. | | 1.4 | 1.4 |
| Unnotched Izod impact, ft.lbs./in. | | 14.4 | 15.2 |
| Flexural strength, psi | | 26.700 | 26,900 |
| Tensile strength, psi | | 18,500 | 18,500 |
| Specific gravity, g./cc. | | 1.48 | 1.48 |
| Melt Viscosity, 500°F., 25 psi | | | |
| At Dwell Time: | 5 min. | 2622 | 4160 |
| | 7.5 min. (% redn.) | 2060(21) | 3620(13) |
| | 10 min. | 1700(35) | 3240(22) |
| | 12.5 min. | 1350(48) | 2920(30) |

* Control

a Owens Corning P387F, G filament

The data demonstrate that the use of a trifunctional phenolic epoxy resin in place of linear and/or novolac epoxy resins substantially improves the melt stability of 30% glass reinforced poly(cyclohexane dimethylene terephthalate) molding compounds without affecting other important physical properties.

EXAMPLES 2-3

The general procedure of Example 1 was repeated, but this time including a flame retardant additive, and employing a triallyl compound in place of a tri glycidyloxy compound as a melt stabilizer. For comparison purposes, a conventional linear epoxy prepolymer stabilizer was also used. The formulations employed and the properties obtained are set forth in Table 2 as follows:

TABLE 2: Allyl Stabilizers In Flame Retardant Glass-Reinforced PCT Molding Compounds

| Example | 2A* | 2 | 3A | 3 |
|---|---|---|---|---|
| Compositions (parts by weight) | | | | |
| PCT | 48.6 | 48.6 | 49.2 | 49.2 |
| Reinforcing Glass Filaments[a] | 30.0 | 30.0 | 30.0 | 30.0 |
| Nucleating agent, talc | 2.0 | 2.0 | 2.0 | 2.0 |
| Antioxidants | 1.1 | 1.1 | 0.2 | 0.2 |
| Stabilizer, prior art, DER®667 | 0.5 | 0.5 | 0.5 | 0.5 |
| Stabilizer, prior art, ECN® 1299 epoxy cresol novolac | 0.5 | -- | 0.5 | -- |
| Stabilizer, this invention, TAIC, triallyl isocyanurate | -- | 0.5 | -- | 0.5 |
| Stabilizer, prior art, AM595, barium sodium organophosphate | -- | -- | 0.2 | 0.2 |
| Flame retardant PYROCHEK®C68PB, poly(tribromostyrene) | 12.5 | 12.5 | 12.5 | 12.5 |
| Flame retardant synergist, 80% sodium antimonate -20% SURLYN®8920 | 4.5 | 4.5 | 4.5 | 4.5 |
| Properties | | | | |
| Deflection temp. under load, 264 psi,°F. | 501 | 505 | 469 | 501 |
| Notched Izod Impact, ft.lbs./in. | 1.0 | 0.9 | 1.14 | 0.78 |

TABLE 2: (Continued):

| Example | 2A* | 2 | 3A | 3 |
|---|---|---|---|---|
| Unnotched Izod impact, ft.lbs./in. | 10.3 | 9.9 | 10.78 | 11.31 |
| Flexural strength, psi | 27,100 | 24,700 | 25,510 | 26,040 |
| Flexural modulus, $10^6$ psi | 1.18 | 1.23 | -- | -- |
| Tensile strength, psi | 19,000 | 17,600 | 17,120 | 18,070 |
| Specific gravity, g./cc. | 1.617 | 1.624 | 1.602 | 1.637 |
| Melt Viscosity, 580°F. at 400 $sec.^{-1}$ | | | | |
| Dwell Time: 5 min. | 3680 | 2580 | -- | -- |
| 10 min. (% retn.) | 2180 | 1,830 | -- | -- |
| | (59) | (71) | | |
| Thermal Aging at 200°C. | | | | |
| Tensile Strength, 1 day | 16,300 | 15,900 | -- | -- |
| (% retention) | (86) | (90) | | |
| Tensile Strength, 14 days | 11,800 | 13,800 | 12,200 | 11,000 |
| (% retention) | (62) | (78) | | |
| Tensile Strength, 28 days | -- | -- | 10,000 | 10,600 |
| Tensile Strength, 42 days | -- | -- | 7,900 | 8,500 |
| Tensile Strength, 56 days | -- | -- | 6,900 | 7,100 |
| Tensile Impact, 1 day | 22 | 29 | -- | -- |
| Tensile Impact, 14 days | 11 | 13 | -- | -- |

* Control

a See footnote, Table 1

These data show that TAIC is more effective as a melt stabilizer (higher retention of MV from 5 min. to 10 min. dwell time) as well as providing better retention of properties after two weeks of aging at 200°C.

The foregoing patents are incorporated herein by reference.

Many obvious variations will suggest themselves to those skilled in this art. For example, a copolyester of terephthalic acid with ethylene glycol and cyclohexane-1,4-dimethanol (Kodar PETG 6763) can be substituted for Kodar 3879. Instead of using glass filaments, mica or wollastonite can be substituted as reinforcing agents. Other conventional additives such as decabromodiphenyl ether instead of poly-(tribromostyrene) as flame retardant agent or clay instead of talc as nucleating agent, or the nucleating agent can be omitted. A pre-mixture of the epoxy prepolymer and of the isocyanurate compound of this invention can also be used. All are included in conventional amounts. All such variations are within the full scope of the appended claims.

## Claims

1. An improved thermoplastic molding composition comprising:

(a) a polyester resin derived from a mixture of cis-and trans-cyclohexanedimethanol, and a hexacarbocyclic dicarboxylic acid in combination with

(b) a reinforcing agent, optionally in combination with an effective amount of

(c) a crystallization promoting agent selected from talc, clay, or a mixture thereof, the improvement comprising said composition containing

(d) a stabilizer comprising a tribranched phenolic epoxy, a trifunctional allyl isocyanurate compound or a mixture thereof in an amount effective to improve the melt stability of said composition.

2. A thermoplastic molding composition as defined in Claim 1 wherein component (a) comprises from about 35 to about 80 parts by weight, component (b) comprises from about 15 to about 45 parts by weight, component (c) comprises from 0 to about 10 parts by weight, and component (d) comprises from about 0.1 to about 5 parts by weight, based on 100 parts by weight of (a), (b), (c) and (d) combined.

3. A thermoplastic molding composition as defined in Claim 2 wherein said polyester resin (a) has repeating units of the formula:

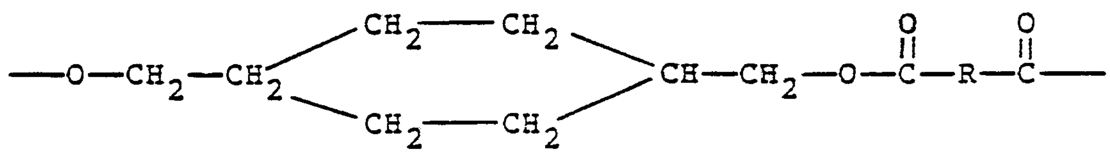

wherein the substituted cyclohexane ring is selected from the group comprising cis-, trans-isomers or mixtures thereof and R represents an organic radical of from about 6 to about 20 carbon atoms which is the decarboxylated residue derived from a hexacarbocyclic dicarboxylic acid.

4. A thermoplastic molding composition as defined in Claim 2 wherein the polyester resin has the repeating unit:

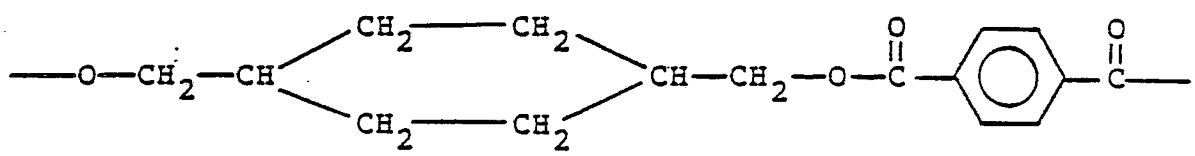

5. A thermoplastic molding composition as defined in Claim 1 wherein said reinforcing agent (b) is selected from glass, mica, graphite or a mixture of any of the foregoing.

6. A thermoplastic molding composition as defined in Claim 5 wherein said reinforcing agent (b) comprises glass.

7. A thermoplastic molding composition as defined in Claim 1 wherein said crystallization promoting agent comprises talc.

8. A thermoplastic molding composition as defined in Claim 2 wherein said crystallization promoting agent comprises clay.

9. A thermoplastic molding composition as defined in Claim 1 wherein said stabilizer (d) is a tribranched phenolic epoxy.

10. A thermoplastic molding composition as defined in Claim 9 wherein said epoxy has prepolymeric units of the formula

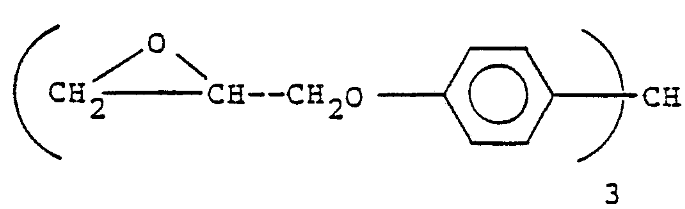

11. A thermoplastic molding composition as defined in Claim 1 wherein said stabilizer (d) comprises a trifunctional allyl isocyanurate compound.

12. A thermoplastic molding composition as defined in Claim 11 wherein said compound is of the formula

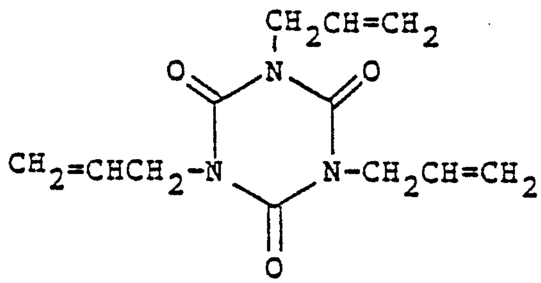

13. A thermoplastic molding composition as defined in Claim 1 which also includes an effective, flame retarding amount of

(e) a flame retardant compound for said composition.

14. A composition as defined in claim 13 wherein said flame retardant compound (e) comprises a brominated aromatic compound, alone, or in combination with an antimony-containing flame retardant synergist.